# EUROPÄISCHE PATENTSCHRIFT

(11) **EP 1 976 639 B1**
(45) Veröffentlichungstag und Bekanntmachung des Hinweises auf die Patenterteilung: **17.02.2010**
(21) Anmeldenummer: 07702993.2
(22) Anmeldetag: 24.01.2007
(51) Int. Cl.: B03C 3/08, B03C 3/155, B03C 3/41

(54) **VORRICHTUNG ZUR LUFTREINIGUNG, INSBESONDERE FÜR LÜFTUNGS- UND KLIMAANLAGEN**
APPARATUS FOR PURIFYING AIR, IN PARTICULAR FOR VENTILATION AND AIR-CONDITIONING SYSTEMS
DISPOSITIF D'EPURATION D'AIR, EN PARTICULIER POUR INSTALLATIONS DE VENTILATION OU DE CLIMATISATION

(30) Priorität: 25.01.2006 CH 1292006
(43) Veröffentlichungstag der Anmeldung: 08.10.2008
(73) Patentinhaber: Lufttechnik + Metallbau AG, 5430 Wettingen (CH)
(72) Erfinder: TIEFENAUER, Kurt, CH-5405 Dättwil (CH); ERNST, Theodor, CH-5400 Baden (CH); ERNST, Beat, CH-5430 Wettingen (CH)
(74) Vertreter: Luchs, Willi
(86) Internationale Anmeldenummer: PCT/EP2007/000586
(87) Internationale Veröffentlichungsnummer: WO 2007/085430

(56) Entgegenhaltungen:
- EP-A- 0 579 310
- EP-A- 1 547 693
- WO-A-03/095095
- FR-A- 2 437 877
- GB-A- 2 265 558
- US-A- 4 349 359
- US-A- 5 622 543

## Beschreibung

Die Erfindung betrifft eine Vorrichtung zur Luftreinigung für Lüftungs- und Klimaanlagen gemäss dem Oberbegriff des Anspruches 1.

Luftreinigungsvorrichtungen sind allgemein bekannt und ihre Bedeutung nimmt mit steigender Luftverschmutzung insbesondere des Feinstaubanteils ständig zu. Je nach Wirkungsgrad und Anwendungsfall werden sie als Taschenfilter, Kompaktfilter oder geschlossene Filterzellen ausgeführt, wobei die Taschenfilter die grösste Verbreitung finden. Die Filter werden nach der Europäischen Norm EN 779/EN1822 gemessen und aufgrund der Wirkungsgrade (Partikelzählung) resp. der Abscheidegrade (durch Wägung) in verschiedene Luftfilterklassen eingeteilt. Die Qualität bzw. der Aufbau des verwendeten Filtermaterials, die Filterfläche sowie der Filterwerkstoff (Glas oder Synthetika) bestimmen zusätzlich zu den genannten konstruktiven Unterschieden die Eigenschaften eines Filters.

Für den Betrieb sind nebst den filtertechnischen Daten der Druckverlust und damit der Energieverbrauch der Filteranlage von ausschlaggebender Bedeutung. Der Energieverbrauch kann bei gleichartigen Filtern, auch der gleichen Filterklasse, erheblich auseinander liegen. Wenn auch die Anfangsdruckverluste in den Verkaufsunterlagen meistens noch nahe beieinander sind, so nehmen sie im Verlaufe des Betriebes von Filtertyp zu Filtertyp ganz unterschiedlich zu.

Bei einem Gerät für die Luftreinigung gemäss der Druckschrift US-A-5,622,543 sind in einem gebildeten Luftkanal mehrere hintereinander angeordnete Filter bzw. Platten vorgesehen. Als erstes passiert die Luft einen Drahtgewebefitter und dann eine perforierte Platte, die als Anionenerzeuger ausgebildet ist und zu diesem Zwecke mit einem Hochspannungsgenerator elektrisch verbindbar ist und ein elektromagnetisches Feld erzeugt. Nach dieser aufladbaren Platte ist ein Staubsammler und anschliessend noch ein Aktivkohlenfilter angeordnet. Nachteilig ist, dass die gesamte Anordnung mit diesen mehreren Filtern und Platten einen sehr niedrigen Wirkungsgrad aufweist und dass dabei diese perforierte Platte mit den rhomboidförmigen Löchern eine solche Geschwindigkeitsreduzierung auf die hindurchströmende Luft bewirkt, dass die Staubpartikel statt bei dem nachfolgenden Staubsammler bereits bei dieser perforierten Platte abscheiden und diese Löcher darin schnell verstopfen.

In der Druckschrift EP-A-0 579 310 ist ein elektrostatischer Filter geoffenbart, welcher durch ein Gehäuse gebildet ist und vorderseitig sowohl einen Einlass als auch einen Auslass aufweist. Die beim Einlass angesaugte Luft wird durch einen Vorfilter und den elektrostatischen Filter und von diesem zum Ventilator und zum Auslass befördert. Der elektrostatische Filter besteht aus einer fächerartig gebildeten Zelle mit parallel zueinander in einem Abstand angeordneten Wänden, welche teils mit unterschiedlichen Abmessungen und dazwischen angeordnete Elektroden versehen sind. Bei dieser Vorrichtung ist dem elektrostatischen Filter nicht ein Filter nachgeschaltet. Es wird die Luftreinigung von dem Vorfilter und dann massgeblich von diesem labyrinthförmig ausgebildeten elektrostatischen Filter ausgeführt. Dabei wird ein solcher Luftwiderstand erzeugt, dass für den Ventilator viel Energie in unwirtschaftlicher Weise verbraucht wird.

Bei der Druckschrift WO-A-03/095095 ist ein nass wirkender elektrostatischer Abscheider (ESP) erläutert, welcher planare, vorzugsweise aus Membranen gefertigte Elektroden und dazwischen angeordnete planare Elektroden zur Erzeugung einer laminaren Strömung des durchfliessenden Gases aufweist. Ausserdem sind zusätzliche Elektroden diesen Membran-Elektroden vorgeschaltet.

Bei einem Luftreiniger gemäss der Druckschrift EP-A-1 547 693 sind in einem kastenförmigen Gehäuse hintereinander ein Vorfilter, ein Ionisierungsteil, ein Staubfilter, eine Durchlasseinrichtung und ein Katalysator-Teil angeordnet. Die Durchlasseinrichtung enthält Elektroden und der anschliessende Katalysator-Teil weist eine wabenförmige Struktur auf. Dieser Luftreiniger ist nicht geeignet für eine Lüftungs- und Klimaanlage, weil mit diesem ein viel zu hoher Luftwiderstand vorherrscht.

Der vorliegenden Erfindung liegt die Aufgabe zugrunde, eine Vorrichtung der eingangs genannten Art zu schaffen, mit der eine Wirkungsgraderhöhung und eine Reduzierung des Wirkungsgrad-Abfalles und eine weitgehende Beibehaltung des Druckverlustes während der gesamten Betriebszeit bei normalen Aussenluftbedingungen erzielt wird.

Diese Aufgabe wird erfindungsgemäss durch die Vorrichtung mit den Merkmalen des Anspruches 1 gelöst.

Erfindungsgemäss wird bei einem bestimmten Filter der Wirkungsgrad dermassen erhöht, dass der Staubdurchlass (die Staub-Penetration) etwa halbiert werden kann. Ausserdem sinkt der Anfangswirkungsgrad während einer üblichen Betriebszeit (z.B. 6'000 Stunden) nur noch unwesentlich, was dem Betreiber eine entscheidende Sicherheit gibt und dies bei nur unwesentlich ansteigendem Druckverlust. Die Energiekosten können dadurch konstant und tief gehalten werden.

Die Erhöhung des Luftfilter-Wirkungsgrades wird branchenüblich durch die Wahl eines feineren Filtermediums gelöst. Feinere dichtere Filtermedien weisen aber einen höheren Luftwiderstand (Druckverlust) auf, welcher während der Betriebszeit zudem wesentlich ansteigt, und es entstehen dadurch höhere Energiekosten. Der erfindungsgemäss dem Luftfilter unmittelbar vorgeschaltete Staub-Agglomerator vergrössert der von der Luft getragene Feinstaub durch Agglomeration derart, dass sie mit einem einfachen Luftfilter besser abgeschieden werden kann. Der Staub wird durch den Agglomerator vorkonditioniert.

Im Unterschied zu den herkömmlichen Elektrofiltern besitzt der Erfindungsgegenstand nur ein einziges Gleichstrom-Hochspannungsfeld, welches die Staubpartikel durch Ionisierung und anschliessender Agglomeration vergrössert, wodurch der Staub im nachgeschalteten Luftfilter von branchenüblicher Ausführung höhergradig abgeschieden wird. Die mehrheitlich gleichpolig geladenen abgeschiedenen Staubpartikel bilden zudem eine elektrostatisch aktive Fläche im Luftfilter, welche die Staubbindung im Filtergewebe zusätzlich verstärkt und die unerwünschte Staubablösung (Shedding) reduziert.

Im Vergleich dazu bleibt bei herkömmlichen Luftfiltern ohne Staub-Agglomerator die während der Medienfabrikation erzeugte elektrostatische Ladung nur solange wirksam, bis die elektrische Ladung abgebaut und damit neutralisiert ist. Dies geschieht bereits nach wenigen Tagen bis Wochen.

Bei der erfindungsgemässen Vorrichtung wird dank des elektrostatischen Feldes die Agglomerator-Wirkung ständig erneuert und der Abscheidegrad bleibt während der Betriebszeit auf dem anfänglich hohen Niveau weitgehend erhalten. Diese Wirkung stellt sich bei Glasfasern wie auch bei synthetischen Filtermedien ein.

Die in der Luft vorhandenen Staubpartikel werden im Staub-Agglomerator in grössere, in der Anzahl reduzierte Staubteilchen umgewandelt, welche wirkungsvoller abgeschieden werden können. Das Filtermedium braucht somit nicht so engmaschig ausgelegt zu sein, was weniger Druckverlust und damit geringerer Energieverbrauch bedeutet. Mit andern Worten, die gleiche Reinigungswirkung kann mit einem "schlechteren" Filter erreicht werden. Wirtschaftlichkeitsberechnungen schliessen den zusätzlichen Energieverbrauch für den Hochspannungsgleichrichter ein.

Die Vorrichtung eignet sich auch bestens für das kostengünstige Nachrüsten bestehender Filteranlagen auf höhere Wirkungsgrade, ohne dass Ventilatoren und Antriebsmotoren wegen der dafür erforderlichen höheren Druckverluste ausgewechselt werden müssen.

Die Vorrichtung eliminiert auch den naturgemässen Nachteil der traditionellen Elektrofilter, indem bei Stromausfall jede Abscheidewirkung des Elektrofilters entfällt. Bei der erfindungsgemässen Vorrichtung bleibt jedoch bei Stromausfall der normale Abscheidegrades Gewebefilters erhalten.

Die Erfindung wird nachfolgend anhand der Zeichnung näher erläutert. Es zeigen:
- Fig. 1: ein Schema einer erfindungsgemässen Vorrichtung zur Luftreinigung;
- Fig. 2: ein Ausführungsbeispiel eines Staub-Agglomerates für die erfindungsgemässe Vorrichtung;
- Fig. 3: ein Ausführungsbeispiel eines Staub-Agglomerates mit einem integrierten Hochspannungs-Gleichrichter, und
- Fig. 4: ein Diagramm als Vergleich des Wirkungsgrades einer erfindungsgemässen Vorrichtung gegenüber einem herkömmlichen Luftfilter.

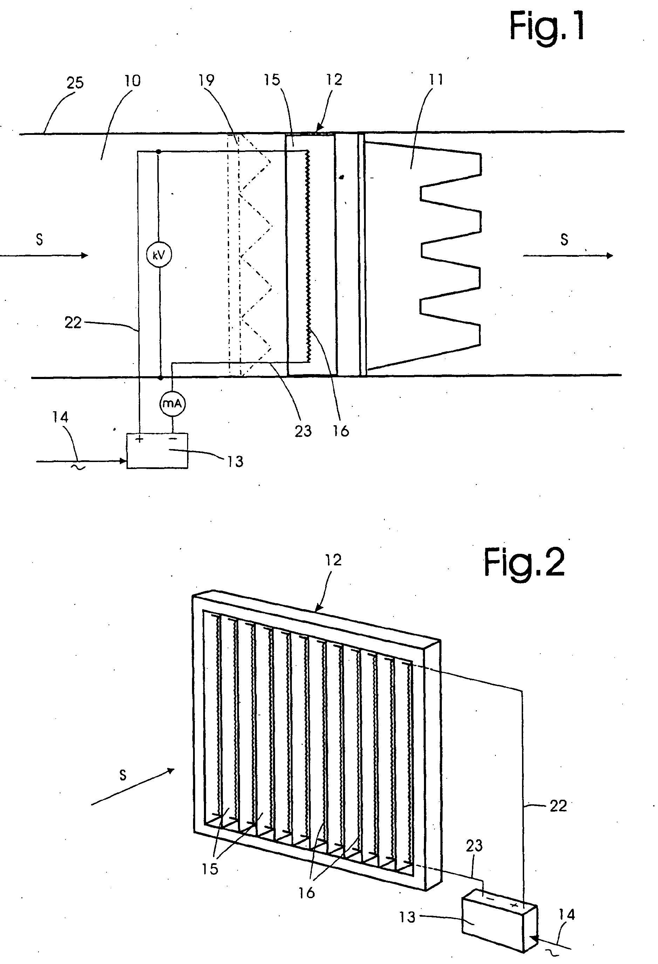

Fig. 1 zeigt schematisch eine Vorrichtung zur Luftreinigung, insbesondere für Lüftungs- und Klimaanlagen, welche in einem durch ein Kanalgehäuse 25 gebildeten Luftkanal 10 montiert ist, durch welchen die zu reinigende Luft in Strömungsrichtung S gefördert wird. Es handelt sich beispielsweise um einen Normkanal für eine Filterzelle, der üblicherweise einen Querschnitt von 610 x 6.10 mm aufweist. Die Luftmenge kann beispielsweise 2700 m³/h oder 3400 m³/h betragen, was einer Luftgeschwindigkeit im Kanal von 2 m/s bzw, 2,5 m/s entspricht.

Dieser Vorrichtung im Luftkanal 10 ist ein Luftfilter 11 zugeordnet, welcher zur Abscheidung von in der Luft vorhandenen Staubpartikeln dient. Es handelt sich dabei um einen handelsüblichen Taschen- bzw. Kompaktfilter, wie solche in verschiedenen Luftfilterklassen auf dem Markt erhältlich sind. Solche Luftfilter bestehen in der Regel aus einem engmaschigen synthetischen Gewebe.

Dem Luftfilter 11 ist unmittelbar davor ein Staub-Agglomerator 12 vorgeschaltet, der auch in Fig. 2 vereinfacht dargestellt ist. Der Staub-Agglomerator 12 weist erfindungsgemäss eine Anzahl von zueinander beabstandeten Elektroden 16 und Blech-Lamellen 15 auf, wobei die drahtähnlich ausgebildeten Elektroden 16 und die Blech-Lamellen 15 jeweils abwechslungsweise angeordnet sind und mit den Elektroden 16 im Luftkanal ein Spannungsfeld, insbesondere ein Gleichspannungsfeld, erzeugbar ist.

Die Elektroden 16 und Blech-Lamellen 15 sind in Reihe in dem rahmenförmig ausgebildeten Staub-Agglomerator 12 in querer Ausrichtung zum Luftkanal 10 angeordnet. Die Blech-Lamellen 15 verlaufen hierbei mit ihrem länglichen Querschnitt in Luftströmungsrichtung S und sie sind zusammen mit den Elektroden vorteilhaft jeweils in einem gleichmässigen Abstand parallel zueinander verlaufend angeordnet, wobei die Elektroden 16 annähernd im Mittenbereich der Blech-Lamellen 15 positioniert sind. Sie können jeweils vorzugsweise als eine Drahtelektrode aus Wolfram oder einem andern Spezialstahl ausgebildet sein, die in Längsrichtung zu den rechteckigen Lamellen 15 (Gegenelektroden) verläuft. Die Elektroden könnten auch wellenförmig ausgebildet und somit wie eine Feder in dem Staub-Agglomerator spannbar sein.

Die Elektroden 16 sind für die Erzeugung des Gleichspannungsfeldes über die Verbindungsleitungen 22, 23 an einen Hochspannungsgleichrichter 13 angeschlossen, und dieser ist seinerseits über eine Leitung 14 mit dem Stromnetz verbunden. Die Spannung des Hochspannungsgleichrichters 13 kann z.B. zwischen 5 kV und 12 kV betragen.

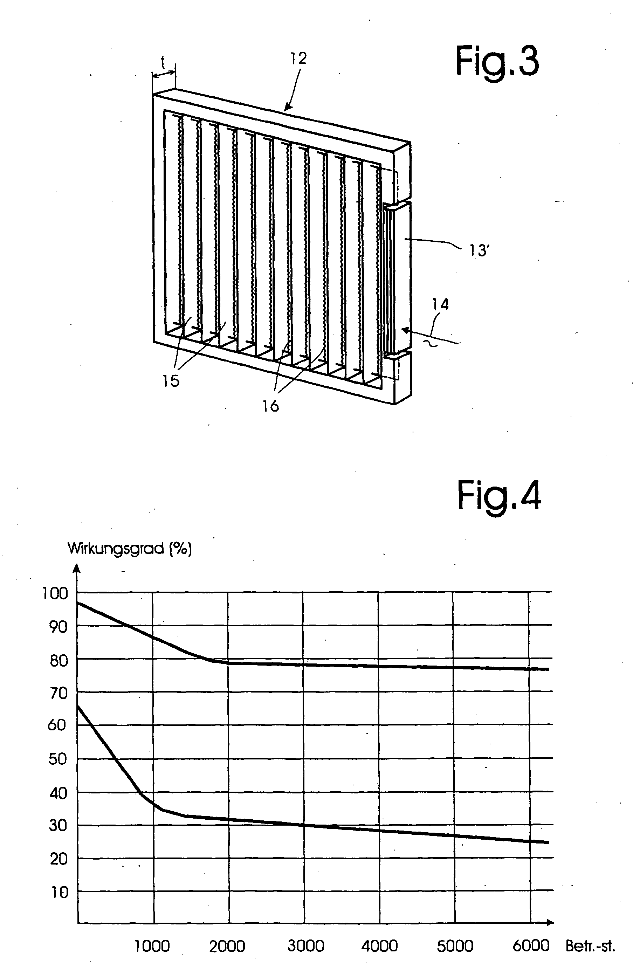

Gemäss Fig. 3 kann der Hochspannungsgleichrichter 13' auch direkt im Staub-Agglomerator 12 integriert sein, so dass diese zusammen als eine einzige Baueinheit auswechselbar sind und damit nur gerade ein Steckeranschluss für die Stromversorgung (z.B. 230 V AC) dieses Gleichrichter vorhanden sein muss. Dieser Hochspannungsgleichrichter 13' ist so dimensioniert, dass er zum Rahmen des Agglomerators 12 nicht vorsteht, so dass der an sich in Normgrösse hergestellte Rahmen in einen entsprechend normierten Kanal eingeschoben werden kann, ohne dass dieser Kanal speziell angepasst werden müsste.

Der rahmenförmige Staub-Agglomerator 12 ist als Einschubmodul ausgebildet und quer in dem Kanalgehäuse 25 vor dem parallel zu ihm angeordneten Luftfilter 11 fixierbar. Er kann auch direkt dem Filterrahmen bzw. dem Filter vorgehängt bzw. an ihm befestigt und als eine gemeinsame Einheit in eine Anlage ein- bzw. ausgebaut werden. Durch eine Optimierung der Konstruktion kann die Tiefe t des Staub-Agglomerator 12 so niedrig gehalten werden, dass auch bestehende Klimageräte bzw. Anlagen mit ihm nachgerüstet werden können. Die Tiefe eines solchen Agglomerators 12 beträgt vorzugsweise zwischen 40 und 60 mm. Auch die Abstände der Elektroden zu den Lamellen sind so gewählt, dass sich optimale Verhältnisse in Bezug auf den Luftwiderstand des Agglomerators 12, auf die elektrostatische Ladung beim Filter und auf die elektrostatische Beeinflussung des Staubes ergeben. Zwischen den Elektroden und den Lamellen ist vorzugsweise ein Abstand von 10 bis 50 mm vorgesehen. Die Lamellen könnten grundsätzlich auch fast wie ein Draht ausgebildet sein.

Vorteilhaft ist dem Staub-Agglomerator 12 ein strichpunktiert dargestellter Vorfilter 19 vorzuschalten, welcher ebenso als handelsüblicher Filter vorgesehen sein kann. Dieser Vorfilter 19 ist vorzugsweise grobmaschig ausgebildet, so dass er den Agglomerator 12 nur von groben Schmutzteilen (Insekten oder ähnlichem) schützen muss.

Der mit dem Hochspannungsgleichrichter 13 (oder bei Grossanlagen mit einer gemeinsamen Gleichstrom-Spannungsquelle) verbundene Staub-Agglomerator 12 besitzt ein einziges Gleichspannungsfeld, so dass im Agglomerator keine Staubabscheidung stattfindet. Die Luft wird ionisiert, und der Staub wird erst in dem zum Staub-Agglomerator 12 nachgeschalteten Luftfilter 11 aufgefangen. Die mehrheitlich gleichpolig geladenen Staubpartikel bilden eine elektrostatisch aktive Fläche im Luftfilter 11, welche die Staubbindung im Filtergewebe zusätzlich verstärkt. Dies ist auch dann besonders wirksam, wenn die zu reinigende Luft Flüssigkeitströpfchen, zum Beispiel Oelpartikel enthält, welche mit der erfindungsgemässen Vorrichtung besser aus der Luft abgeschieden werden.

Während bei herkömmlichen Filtervorrichtungen ohne Staub-Agglomerator die elektrostatische Ladung nur solange wirksam war, bis die Filtergewebe-Fasern mit Staub belegt worden sind resp. die Ladung neutralisiert wurde, wodurch man sich den anfänglich hohen Wirkungsgrad erklärt, ist bei der erfindungsgemässen Vorrichtung das elektrische Feld ständig vorhanden und der Wirkungsgrad bleibt während der Betriebszeit praktisch auf dem anfänglichen hohen Niveau, wie dies aus dem Diagramm in Fig. 4 ersichtlich ist. Das Diagramm zeigt den prinzipiellen Wirkungsgradverlauf beispielhaft in Abhängigkeit der Betriebsstunden und in Bezug auf einen Staubdurchmesser von wenigstens 0.4 µm. Bei einer Vorrichtung mit einem erfindungsgemässen Staub-Agglomerator bei Verwendung eines Taschenfilters der Klasse F7 mit einem synthetischen Medium kann der Wirkungsgrad dauerhaft auf nahezu 80% gehalten werden, indes bei der Verwendung eines gleichen Taschenfilters ergibt sich ein Wirkungsgrad, der auf weniger als 30% absinkt.

Die in der Luft vorhandenen Staubpartikel werden im Staub-Agglomerator 12 in grössere, in der Anzahl reduzierte Staubteilchen umgewandelt, welche wirkungsvoller abgeschieden werden können. Das Luftfilter 11 braucht weniger engmaschig zu sein, was auch weniger Druckverlust bei einem bestimmten Wirkungsgrad bedeutet. Mit anderen Worten, das gleiche Reinigungsresultat kann mit einem "schlechteren" Filter erreicht werden, oder der gleiche Filter ist für kompaktere Lösungen (mit kürzeren Luftfiltern) geeignet.

Die erfindungsgemässe Vorrichtung ist wirtschaftlich günstiger als herkömmliche Luftreinigungsvorrichtungen mit vergleichbarem Wirkungsgrad, trotz der Notwendigkeit von zusätzlicher elektrischer Energie für den Staub-Agglomerator, da die Anlagen mit Filtern einer tieferen Klasse und damit kleinerem Druckverlust (Energieverbrauch und Anschaffungskosten) ausgerüstet werden können.

Sie ist nicht nur für Lüftungs- und Klimaanlagen sondern auch für technisch, industrielle Zwecke wie in der Reinraumtechnik von Bedeutung, oder für Filteranwendungen in der pharmazeutischen Industrie oder in der Kernindustrie.

Der Nutzen des Agglomerators zeigt sich besonders im submikronen Partikelbereich, wo die Brown'sche Bewegung der Moleküle wirksam ist. Die Brown'sche Bewegung wird durch die zugeführte Feld-Energie verstärkt (Kinematische Koagulation), weshalb die erfindungsgemässe Vorrichtung besonders im submikronen Feinstaubbereich und in der Nanotechnologie Verwendung findet.

Es sei hierbei noch erwähnt, dass erfindungsgemässe Agglomeratoren aber auch den Filterzellen von ganzen Filterwänden bei Grossanlagen vorgeschaltet werden können.

## Patentansprüche

1. Vorrichtung zur Luftreinigung für die Staubabscheidung, mit einem Luftfilter (11) oder einer Filterwand und einem Staub-Agglomerator (12) mit einer Anzahl von zueinander abwechslungsweise angeordneten und beabstandeten, drahtähnlich ausgebildeten Elektroden (16) und Blech-Lamellen (15), wobei mit den Elektroden (16) ein Spannungsfeld, insbesondere ein Gleichspannungsfeld, erzeugbar ist, **dadurch gekennzeichnet, dass** der Staub-Agglomerator (12) in einem Luftkanal (10) einer Lüftungs- und Klimaanlage dem Luftfilter (11) oder der Filterwand vorgeschaltet ist.

2. Vorrichtung nach Anspruch 1, **dadurch gekennzeichnet, dass** die Elektroden (16) und Blech-Lamellen (15) in Reihe in dem rahmenförmig ausgebildeten Staub-Agglomerator (12) und dies in querer Ausrichtung zum Luftkanal (10) angeordnet sind.

3. Vorrichtung nach Anspruch 1 oder 2, **dadurch gekennzeichnet, dass** die Blech-Lamellen (15) mit ihrem länglichen Querschnitt in Luftströmungsrichtung (S) verlaufen.

4. Vorrichtung nach einem der vorhergehenden Ansprüche 1 bis 3, **dadurch gekennzeichnet, dass** die Elektroden (16) und die Blech-Lamellen (15) jeweils in einem gleichmässigen Abstand parallel zueinander verlaufend angeordnet sind, wobei die Elektroden (16) annähernd im Mittenbereich der Blech-Lamellen (15) positioniert sind.

5. Vorrichtung nach einem der vorhergehenden Ansprüche 1 bis 4, **dadurch gekennzeichnet, dass** die Elektroden (16) aus Draht vorzugsweise aus Wolfram oder aus Spezialstahl bestehen.

6. Vorrichtung nach einem der vorhergehenden Ansprüche 1 bis 4, **dadurch gekennzeichnet, dass** die Elektroden (16) aus einem schmalen dünnen Blechstreifen bestehen.

7. Vorrichtung nach einem der vorhergehenden Ansprüche 1 bis 6, **dadurch gekennzeichnet, dass** die Elektroden (16) wellenförmig ausgebildet und somit wie eine Feder in dem Staub-Agglomerator (12) spannbar sind.

8. Vorrichtung nach einem der vorhergehenden Ansprüche 1 bis 7, **dadurch gekennzeichnet, dass** der rahmenförmige Staub-Agglomerator (12) als Einschubmodul ausgebildet und quer in einem Kanalgehäuse (25) vor dem parallel zu ihm angeordneten Luftfilter (11) fixierbar ist.

9. Vorrichtung nach einem der vorhergehenden Ansprüche 1 bis 8, **dadurch gekennzeichnet, dass** der rahmenförmige Staub-Agglomerator (12) eine Tiefe zwischen 40 und 60 mm aufweist, so dass sich dieser für einen nachträglichen Einbau in eine bestehende Anlage eignet.

10. Vorrichtung nach einem der vorhergehenden Ansprüche 1 bis 9, **dadurch gekennzeichnet, dass** zur Erzeugung des Gleichspannungsfeldes ein Hochspannungsgleichrichter (13) verwendbar ist.

11. Vorrichtung nach Anspruch 10, **dadurch gekennzeichnet, dass** die Spannung des Hochspannungsgleichrichters (13) zwischen 5 und 15 kV beträgt.

12. Vorrichtung nach Anspruch 9 oder 10, **dadurch gekennzeichnet, dass** der Hochspannungsgleichrichter (13') direkt im Rahmen des Staub-Agglomerators (12) integriert ist.

13. Vorrichtung nach Anspruch 1, **dadurch gekennzeichnet, dass** ein Vorfilter direkt vor den unmittelbar vor dem jeweiligen Luftfilter (11) angeordneten Staub-Agglomerator (12) montierbar ist.

14. Vorrichtung nach Anspruch 1, **dadurch gekennzeichnet, dass** der Staub-Agglomerator als Einschubmodul direkt am Filterrahmen bzw. am Filter befestigt ist und als gemeinsame Einheit in einem Kanalgehäuse einbaubar sind.

## Claims

1. Apparatus for air purification for dust separation, having an air filter (11) or a filter wall and a dust agglomerator (12) with a number of electrodes (16) designed like wires and sheet metal plates (15) spaced from one another alternately, whereby with the electrodes (16) are generatable a voltage field, in particular a d.c. voltage field, **characterised in that**
the dust agglomerator (12) arranged in an air duct (10) of a ventilation and air conditioning system is connected upstream to the air filter (11) or the filter wall.

2. Apparatus according to claim 1, **characterised in that** the electrodes (16) and sheet metal plates (15) are arranged in series in the frame-shaped designed dust agglomerator (12) and wherein this is oriented transversely to the air duct (10).

3. Apparatus according to claim 1 or 2, **characterised in that** the sheet metal plates (15) have their longitudinal section running in the air-flow direction (S).

4. Apparatus according to one of the preceding claims 1 to 3, **characterised in that** the electrodes (16) and the sheet metal plates (15) are arranged respectively in an equal spacing running parallel to one another, in which the electrodes (16) are positioned approximately in the centre region of the sheet metal plates (15).

5. Apparatus according to one of the preceding claims 1 to 4, **characterised in that** the electrodes (16) consist of wire preferably of tungsten or special steel.

6. Apparatus according to one of the preceding claims 1 to 4, **characterised in that** the electrodes (16) consist of a slender thin sheet metal strip.

7. Apparatus according to one of the preceding claims 1 to 6, **characterised in that** the electrodes (16) are designed to be undulating and consequently are tensible like a spring in the dust agglomerator (12).

8. Apparatus according to one of the preceding claims 1 to 7, **characterised in that** the frame-like dust agglomerator (12) is designed as a plug-in module and is able to be fixed transversely in a channel enclosure (25) in front of the air filter (11) which is arranged parallel to it.

9. Apparatus according to one of the preceding claims 1 to 8, **characterised in that** the frame-like dust agglomerator (12) exhibits a depth of between 40 and 60 mm, so that it is suitable for being retro-fitted to an existing system.

10. Apparatus according to one of the preceding claims 1 to 9, **characterised in that** a d.c. rectifier (13) is able to be employed to generate a d.c. electric field.

11. Apparatus according to claim 10, **characterised in that** the voltage of the d.c. rectifier (13) lies between 5 and 15 kV.

12. Apparatus according to claim 9 or 10, **characterised in that** the d.c. rectifier (13) is integrated directly into the dust agglomerator (12) frame.

13. Apparatus according to claim 1, **characterised in that** a preliminary filter is able to be fitted directly in front of the dust agglomerator (12), which is arranged to be immediately in front of the corresponding filter (11).

14. Apparatus according to claim 1, **characterised in that** the dust agglomerator in the form of a plug-in module is fastened directly to the filter frame or to the filter and is able to assembled into a channel enclosure as a common unit.

## Revendications

1. Dispositif de purification d'air pour le dépoussiérage, comprenant un filtre à air (11) ou une paroi filtrante et un agglomérateur de poussière (12) avec un certain nombre d'électrodes (16) conformées en fil métallique et de lamelles de tôle (15) disposées en alternance l'une avec l'autre et espacées l'une de l'autre, dans lequel on peut générer avec les électrodes (16) un champ de tension, en particulier un champ de tension continue, **caractérisé en ce que** l'agglomérateur de poussière (12) est raccordé devant le filtre à air (11) ou la paroi filtrante dans un canal d'air (10) d'une installation d'aération et de climatisation.

2. Dispositif selon la revendication 1, **caractérisé en ce que** les électrodes (16) et les lamelles de tôle (15) sont aménagées en série dans l'agglomérateur de poussière (12) conformé en cadre et ce, en orientation transversale par rapport au canal d'air (10).

3. Dispositif selon la revendication 1 ou 2, **caractérisé en ce que** les lamelles de tôle (15) s'étendent avec leur section transversale oblongue dans la direction d'écoulement d'air (S).

4. Dispositif selon l'une quelconque des revendications précédentes 1 à 3, **caractérisé en ce que** les électrodes (16) et les lamelles de tôle (15) sont disposées respectivement de manière à s'étendre parallèlement l'une à l'autre à une distance uniforme, les électrodes (16) étant positionnées approximativement dans la zone centrale des lamelles de tôle (15).

5. Dispositif selon l'une quelconque des revendications précédentes 1 à 4, **caractérisé en ce que** les électrodes (16) sont constituées de fil métallique, de préférence de tungstène ou d'un acier spécial.

6. Dispositif selon l'une quelconque des revendications précédentes 1 à 4, **caractérisé en ce que** les électrodes (16) sont constituées d'une bande étroite de tôle mince.

7. Dispositif selon l'une quelconque des revendications précédentes 1 à 6, **caractérisé en ce que** les électrodes (16) présentent une forme ondulée et peuvent donc être tendues comme un ressort dans l'agglomérateur de poussière (12).

8. Dispositif selon l'une quelconque des revendications précédentes 1 à 7, **caractérisé en ce que** l'agglomérateur de poussière (12) en forme de cadre se présente sous la forme d'un module enfichable et peut être fixé transversalement dans un logement de canalisation (25) devant le filtre à air (11) qui lui est aménagé parallèlement.

9. Dispositif selon l'une quelconque des revendications précédentes 1 à 8, **caractérisé en ce que** l'agglomérateur de poussière (12) en forme de cadre présente une profondeur comprise entre 40 et 60 mm de sorte qu'il convienne à une insertion ultérieure dans une installation existante.

10. Dispositif selon l'une quelconque des revendications précédentes 1 à 9, **caractérisé en ce que** l'on peut employer un redresseur à haute tension (13) pour générer le champ de tension continue.

11. Dispositif selon la revendication 10, **caractérisé en ce que** la tension du redresseur à haute tension (13) est comprise entre 5 et 15 kV.

12. Dispositif selon la revendication 9 ou 10, **caractérisé en ce que** le redresseur à haute tension (13') est directement intégré au cadre de l'agglomérateur de poussière (12).

13. Dispositif selon la revendication 1, **caractérisé en ce qu'**un préfiltre peut être monté directement devant l'agglomérateur de poussière (12) aménagé directement devant le filtre à air respectif (11).

14. Dispositif selon la revendication 1, **caractérisé en ce que** l'agglomérateur de poussière est fixé, comme module enfichable, directement sur le cadre de filtre ou sur le filtre et peut être incorporé sous forme d'unité commune dans un logement de canalisation.
